# EUROPEAN PATENT SPECIFICATION

(11) **EP 4 368 427 B1**
(45) Date of publication and mention of the grant of the patent: **06.05.2026**
(21) Application number: 23208109.1
(22) Date of filing: 07.11.2023
(51) Int. Cl.: B60J 7/047

(54) **OPENABLE ROOF WITH THERMALLY INSULATED SLATS**
ÖFFNUNGSFÄHIGES DACH MIT THERMISCH ISOLIERTEN LAMELLEN
TOIT OUVRANT À LAMELLES THERMIQUEMENT ISOLÉES

(30) Priority: 08.11.2022 IT 202200022998
(43) Date of publication of application: 15.05.2024
(73) Proprietor: OPAC S.r.l., 10040 Rivalta di Torino (Torino) (IT)
(72) Inventor: SACCO, Luca, I-10040 RIVALTA DI TORINO (Torino) (IT)
(74) Representative: Vanzini, Christian

(56) References cited:
- EP-A1- 3 473 459
- DE-A1- 10 143 564
- DE-C1- 4 443 526
- FR-A1- 2 469 516
- US-B2- 10 107 023

## Description

The present invention relates to an openable roof, comprising a frame and a plurality of slats mounted on the frame and movable between a closing position in which the slats are lowered and cover an area delimited by the frame, and an opening position in which the slats are raised, each of said slats comprising a main slat body having a lower side and an upper side which, in the closing position of the slats, are facing downwards and upwards, respectively.

It has been observed that in sunny or high ambient temperature conditions, in openable roofs with slats made of metal material, there is a relatively substantial heat transfer between the upper and lower sides of the slats, which may make conditions in the passenger compartment below the retractable roof uncomfortable. FR 2469516 A1 and DE 4443526 C1 disclose openable roofs according to the preamble of claim 1.

An object of the present invention is to provide a solution that may at least partially overcome the drawbacks discussed above in relation to retractable roofs comprising slats made of metal material.

According to the present invention, an openable roof having the features of claim 1 is proposed. In this openable roof, said main slat body comprises
a lower slat part arranged at said lower side and formed by a first metal profile,
an upper slat part arranged at said upper side and formed by a second metal profile, and
an intermediate connection part by which the lower slat part and the upper slat part are structurally connected to each other, said intermediate connection part being made of a thermally insulating material, so that the upper slat part and the lower slat part are thermally insulated from each other.

Such a solution achieves a thermal break between the upper and lower sides of the slat that interrupts or otherwise significantly hinders the heat transfer downwards.

According to one embodiment, the first metal profile is a hollow profile, preferably a multi-chamber profile. This allows for a relatively lightweight slat with adequate mechanical performance.

According to one embodiment, the second metal profile is a sheet, along which longitudinal ribs are formed. In this way, the construction of the slat structure is simplified.

According to one embodiment, the intermediate connection part is arranged within a recess formed in the first metal profile. This allows the overall thickness of the slat to be contained.

According to the invention, the intermediate connection part comprises at least one guide forming on one side a prismatic pair with a first formation formed on the first metal profile, and forming on the other side a prismatic pair with a second formation formed on the second metal profile, said at least one guide extending along a longitudinal direction of said main slat body. In this way, the assembly of the slat parts is particularly easy.

Further features and advantages of the openable roof according to the invention will become clearer from the following detailed description of an embodiment of the invention, made in reference to the accompanying drawings, provided purely for illustrative and nonlimiting purposes, wherein:
- Fig. 1 and 2 are perspective views of an openable roof in a closing and an opening position, respectively; and
- Fig. 3 and 4 are a partial perspective view and a cross-sectional view of the main body of a slat according to the invention, respectively.

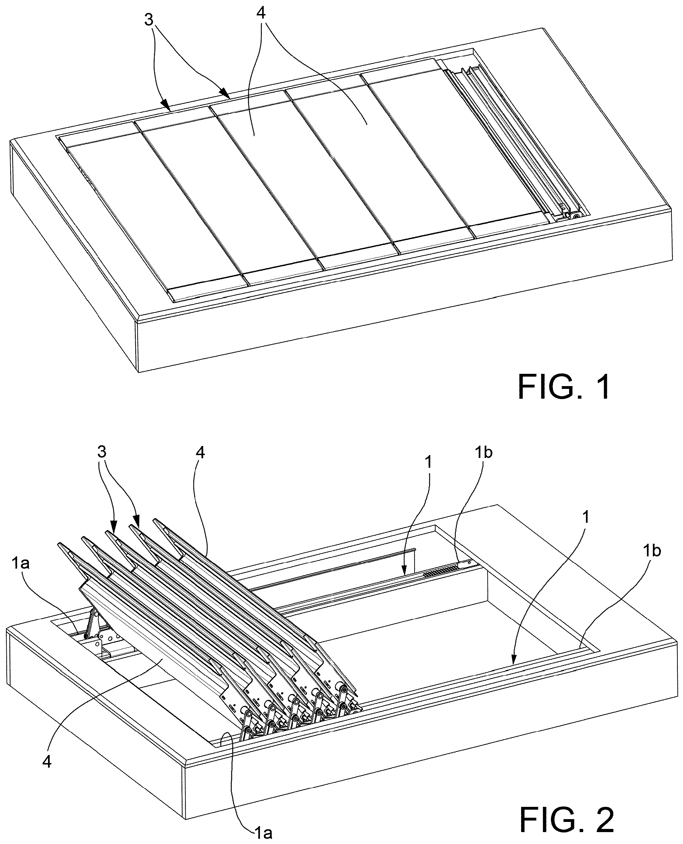

Fig. 1 and 2 show an example of an openable roof installed on an opening formed in a roof of a vehicle, such as a boat.

The openable roof comprises a frame 1, which in the example shown comprises a pair of parallel guides, arranged on opposite sides of the opening and having opposite ends 1a and 1b. The retractable roof further comprises a plurality of slats 3 mounted on the frame 1 and movable between a closing position (Fig. 1), in which the slats 3 are lowered and cover the opening defined by the frame 1, and an opening position (Fig. 2), in which the slats 3 are raised.

In the example shown, in the open position, the slats 3 are also packed at one end of the guides 1. For this purpose, the slats 3 are articulatedly connected to two sets of carriages (not shown) sliding along the guides. To this end, a control system is associated with the carriages to cause the carriages to move. However, this is only an example, and the invention is not bound to the specific ways in which the slats 3 are moved. For example, according to an alternative embodiment that is not shown, the slats could simply be rotatable around respective fixed axes between the closing and opening positions, without making any sliding movement along guides.

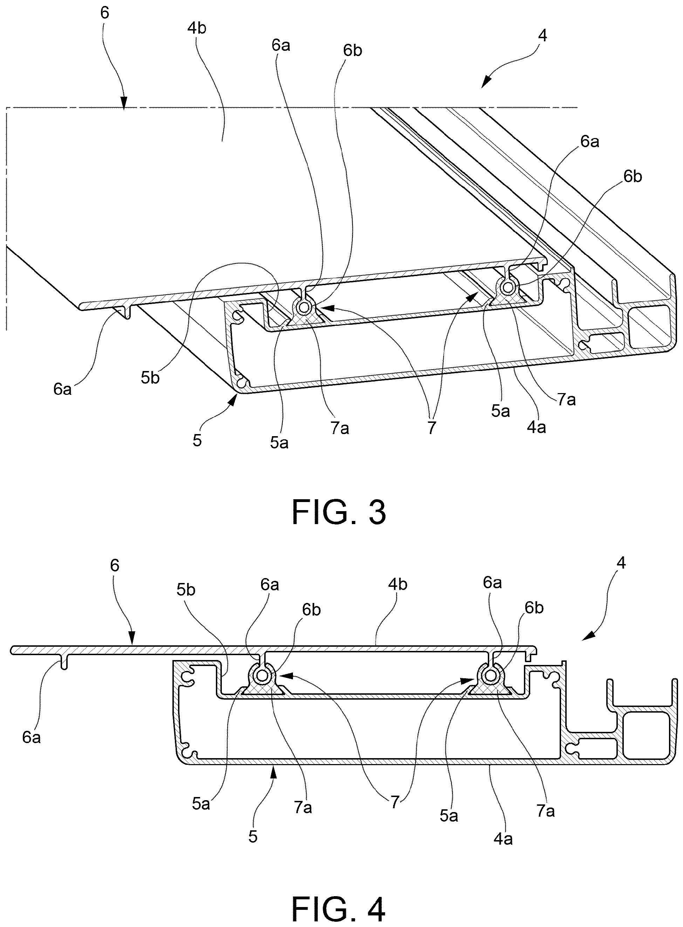

Referring to Fig. 3 and 4, each of the slats 3 comprises a main slat body 4 having a lower side 4a and an upper side 4b, which, in the closing position of the slats 3, face downwards and upwards, respectively. At the ends of the main slat body 4, end elements are mounted (visible in Fig. 2), by means of which the slat 3 is connected to the carriages or directly to the frame 1, depending on the type of openable roof.

The main slat body 4 comprises a lower slat part 5 arranged at the lower side 4a of the slat. The lower slat part 5 is formed by a first metal profile, for example made of aluminum. In particular, the first metal profile is a hollow profile, preferably a multi-chamber profile.

The main slat body 4 further comprises an upper slat part 6 arranged at the upper side 4b of the slat. The upper slat part 6 is formed by a second metal profile, for example made of aluminum. In particular, the second metal profile is a sheet, along which longitudinal ribs 6a are formed.

The main slat body 4 further comprises an intermediate connection part 7 by which the lower slat part 5 and the upper slat part 6 are structurally connected to each other. The intermediate connection part 7 is made of thermally insulating material, such as plastics material.

The intermediate connection part 7 comprises at least one guide 7a, in the example shown two guides 7a separated from each other. Each guide 7a forms a prismatic pair on one side with a first formation 5a formed on the first metal profile/lower slat part 5, and on the other side with a second formation 6b formed on the second metal profile/upper slat part 6. The first formation 5a and the second formation 6b extend along a longitudinal direction of the main slat body 4. In the example shown, the first formation 5a is formed on a surface of the first metal profile/lower slat portion 5 as a groove that couples with a dovetailed portion of the guide 7a. The second formation 6b, on the other hand, is formed on the distal end of a relevant rib 6a of the second metal profile/lower slat part 6, as an enlarged head portion which couples with a groove of the guide 7a.

Thus, the assembly of the parts 5-7 to form the main slat body 4 is carried out in a simple way, by sliding the parts 5-7 relative to each other along the longitudinal direction, and taking advantage of the prismatic pairs between the lower slat part 5 and the intermediate connection part 7, and between the intermediate connection part 7 and the upper slat part 6.

In the example shown, the intermediate connection part 7 is arranged within a recess 5b formed in the first metal profile/lower slat part 5.

## Claims

1. Openable roof comprising a frame (1) and a plurality of slats (3) mounted on the frame (1) and movable between a closing position in which the slats (3) are lowered and cover an area delimited by the frame (1), and an opening position in which the slats (3) are raised, each of said slats comprising a main slat body (4) having a lower side (4a) and an upper side (4b) which, in the closing position of the slats (3), are facing downwards and upwards, respectively,
wherein said main slat body (4) comprises
a lower slat part (5) arranged at said lower side (4a) and formed by a first metal profile,
an upper slat part (6) arranged at said upper side (4b) and formed by a second metal profile, and
an intermediate connection part (7) by which the lower slat part (5) and the upper slat part (6) are structurally connected to each other, said intermediate connection part (7) being made of a thermally insulating material, so that the upper slat part (6) and lower slat part (5) are thermally insulated from each other,
**characterized in that** the intermediate connection part (7) comprises at least one guide (7a) forming on one side a prismatic pair with a first formation (5a) formed on the first metal profile, and forming on the other side a prismatic pair with a second formation (6b) formed on the second metal profile, said at least one guide (7a) extending along a longitudinal direction of said main slat body (4).

2. Openable roof according to claim 1, wherein the first metal profile is a hollow profile, preferably a multi-chamber profile.

3. Openable roof according to claim 1 or 2, wherein the second metal profile is a sheet, along which longitudinal ribs (6a) are formed.

4. Openable roof according to any of the preceding claims, wherein the intermediate connection part (7) is arranged within a recess (5b) formed in the first metal profile.

## Patentansprüche

1. Öffnungsfähiges Dach umfassend einen Rahmen (1) und eine Mehrzahl von Lamellen (3), die auf dem Rahmen (1) eingebaut werden und zwischen einer Schließstellung, in der die Lamellen (3) abgesenkt werden und einen Bereich abdecken, der durch den Rahmen (1) begrenzt wird, und einer Öffnungsstellung, in der die Lamellen (3) angehoben werden, beweglich sind, wobei jede der Lamellen einen Hauptlamellenkörper (4) umfasst, der eine Unterseite (4a) und eine Oberseite (4b) aufweist, die in der Schließstellung der Lamellen (3) jeweils nach unten bzw. nach oben gerichtet sind,
wobei der Hauptlamellenkörper (4) umfasst
einen unteren Lamellenteil (5), der an der Unterseite (4a) angeordnet ist und durch ein erstes Metallprofil gebildet wird,
einen oberen Lamellenteil (6), der an der Oberseite (4b) angeordnet ist und durch ein zweites Metallprofil gebildet wird, und
einen Zwischenverbindungsteil (7), durch den der untere Lamellenteil (5) und der obere Lamellenteil (6) strukturell miteinander verbunden sind, wobei der Zwischenverbindungsteil (7) aus einem thermisch isolierenden Material hergestellt wird, so dass der obere Lamellenteil (6) und der untere Lamellenteil (5) thermisch voneinander isoliert sind,
**dadurch gekennzeichnet, dass** der Zwischenverbindungsteil (7) mindestens eine Führung (7a) umfasst, die auf einer Seite ein prismatisches Paar mit einer ersten Ausbildung (5a) bildet, die an dem ersten Metallprofil ausgebildet wird, und das auf der anderen Seite ein prismatisches Paar mit einer zweiten Ausbildung (6b) bildet, die an dem zweiten Metallprofil ausgebildet wird, wobei sich die mindestens eine Führung (7a) entlang einer Längsrichtung des Hauptlamellenkörpers (4) erstreckt.

2. Öffnungsfähiges Dach nach Anspruch 1, wobei das erste Metallprofil ein Hohlprofil ist, vorzugsweise ein Mehrkammerprofil.

3. Öffnungsfähiges Dach nach Anspruch 1 oder 2, wobei das zweite Metallprofil ein Blech ist, entlang dessen Längsrippen (6a) ausgebildet sind.

4. Öffnungsfähiges Dach nach einem der vorhergehenden Ansprüche, wobei der Zwischenverbindungsteil (7) innerhalb einer Ausnehmung (5b) angeordnet ist, die in dem ersten Metallprofil ausgebildet wird.

## Revendications

1. Toit ouvrant comprenant un cadre (1) et une pluralité de lamelles (3) montées sur le cadre (1) et mobiles entre une position de fermeture dans laquelle les lamelles (3) sont abaissées et couvrent une zone délimitée par le cadre (1), et une position d'ouverture dans laquelle les lamelles (3) sont relevées, chacune desdites lamelles comprenant un corps principal de lamelle (4) ayant un côté inférieur (4a) et un côté supérieur (4b) qui, dans la position de fermeture des lamelles (3), sont orientés vers le bas et vers le haut, respectivement,
où ledit corps principal de lamelle (4) comprend
une partie inférieure de lamelle (5) disposée au niveau dudit côté inférieur (4a) et formée par un premier profilé métallique,
une partie supérieure de lamelle (6) disposée au niveau dudit côté supérieur (4b) et formée par un second profilé métallique, et
une partie intermédiaire de connexion (7) par laquelle la partie inférieure de lamelle (5) et la partie supérieure de lamelle (6) sont structurellement connectées l'une à l'autre, ladite partie intermédiaire de connexion (7) étant réalisée en un matériau thermiquement isolant, de sorte que la partie supérieure de lamelle (6) et la partie inférieure de lamelle (5) sont thermiquement isolées l'une de l'autre,
**caractérisé en ce que** la partie intermédiaire de connexion (7) comprend au moins un guide (7a) formant d'un côté une paire prismatique avec une première formation (5a) formée sur le premier profilé métallique, et formant de l'autre côté une paire prismatique avec une seconde formation (6b) formée sur le second profilé métallique, ledit au moins un guide (7a) s'étendant le long d'une direction longitudinale dudit corps principal de lamelle (4).

2. Toit ouvrant selon la revendication 1, dans lequel le premier profilé métallique est un profilé creux, de préférence un profilé à chambres multiples.

3. Toit ouvrant selon la revendication 1 ou 2, dans lequel le second profilé métallique est une tôle, le long de laquelle sont formées des nervures longitudinales (6a).

4. Toit ouvrant selon l'une quelconque des revendications précédentes, dans lequel la partie intermédiaire de connexion (7) est disposée à l'intérieur d'un évidement (5b) formé dans le premier profilé métallique.
